# EUROPEAN PATENT APPLICATION

(11) **EP 4 729 339 A1**
(43) Date of publication of application: **22.04.2026**
(21) Application number: 24207507.5
(22) Date of filing: 18.10.2024
(51) Int. Cl.: B60L 50/70, B60L 58/33, H01M 8/04007, H01M 8/0432, H01M 8/04701, H01M 8/04858

(54) **MANAGING TRANSITION OF A FUEL CELL VEHICLE TO A HOT OPERATING MODE**

(71) Applicant: Volvo Truck Corporation, 405 08 Göteborg (SE)
(72) Inventor: BLOMGREN, Fredrik, 425 35 Hisings Kärra (SE); HINDI, Gustavo, 449 50 Alafors (SE); DESAI, Parthav, 417 28 Göteborg (SE)
(74) Representative: Valea AB

(57) **Abstract**

A system and method for controlling transition of a fuel cell vehicle from a normal operating mode to a hot operating mode comprising a fuel saving operating mode. The method comprises determining a required value of a traction power from the fuel cell system for the fuel cell vehicle; determining a net electric power output value of the fuel cell system based on a fuel cell system power output and a cooling electrical power value; and controlling the fuel cell vehicle to transition from the normal operating mode to the hot operating mode via a first transition mode or via a second transition mode so that the net electric power output value is equal to the required value of the traction power and a coolant inlet temperature at a coolant inlet of a fuel cell stack of a fuel cell system of the fuel cell vehicle is equal to a hot coolant temperature.

## Description

### TECHNICAL FIELD

The disclosure relates generally to controlling operation of a fuel cell vehicle for managing a transition of the fuel cell vehicle to a hot operating mode comprising a fuel saving operating mode of the fuel cell vehicle.

The disclosure can be applied in heavy-duty vehicles, such as trucks, buses, and construction equipment, as well as in stationary applications. Although the disclosure may be described with respect to a particular vehicle, the disclosure is not restricted to any particular vehicle.

### BACKGROUND

A fuel cell is an electro-chemical device that includes an electrolyte sandwiched between two electrodes such as an anode and a cathode. Solid polymer electrolyte fuel cells, which employ a proton exchange, solid polymer membrane electrolyte, electrochemically convert reactants - fuel such as hydrogen received at the anode or anode side, and oxidant such as oxygen or air received at the cathode or cathode side, to generate electric power. Two or more fuel cells are usually arranged together into a fuel cell stack, in order to provide a higher output voltage. One or more fuel cell stacks may form a fuel cell system. Proton exchange membrane (PEM) fuel cells are considered well suitable for vehicular applications e.g. in fuel cell electric vehicles (FCEVs).

A fuel cell vehicle comprises a cooling system that comprises a coolant circulating therein that is passed through a fuel cell stack of the fuel cell system to maintain a temperature of fuel cells in the stack. When a fuel cell vehicle requests increased power from its fuel cell system, e.g., at long steep climbs or at higher speeds, the fuel cell system generates a lot of heat in the coolant of the cooling system and cooling the vehicle becomes difficult. Hot ambient temperatures exacerbate the task of keeping the fuel cell system at a desired temperature. Furthermore, a high heat generation or energy loss at high fuel cell system powers entails an increased fuel consumption. Thus, performance of a FCEV during long and steep climbs, or in other cases at which a power demand on the fuel cell system increases, may be a major limiting factor that leads to increase in cost of operating the fuel cell vehicle and/or decrease in performance and fuel economy.

Various methods have been proposed for controlling a fuel cell system and a cooling system of a fuel cell vehicle. However, a need remains for improved methods for controlling the fuel cell vehicle.

### SUMMARY

According to a first aspect of the disclosure, a control system for a fuel cell vehicle is provided. The fuel cell vehicle comprises a fuel cell system comprising a fuel cell stack configured to generate power by electrochemical reaction, and a cooling system configured to circulate a coolant through the fuel cell system to dissipate heat generated by the fuel cell system. The control system comprises processing circuitry that is configured to control transition or switch of the fuel cell vehicle from a normal operating mode to a hot operating mode comprising a fuel saving operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature. The processing circuitry is configured to:
determine a required value of a traction power from the fuel cell system for the fuel cell vehicle;
determine a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output;
when the fuel cell vehicle is operating in the normal operating mode, control the fuel cell vehicle to transition from the normal operating mode to the hot operating mode via a first transition mode or a second transition mode by:
   in the first transition mode, controlling the fuel vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and
   in the second transition mode, controlling the fuel vehicle to decrease the cooling electrical power while maintaining the fuel cell system power output constant thereby increasing the coolant inlet temperature at the coolant inlet of the fuel cell stack, until the coolant inlet temperature is equal to the hot coolant temperature.

The first aspect of the disclosure may seek to control a fuel cell power during the hot operating mode of the vehicle in which the temperature of the coolant is increasing to improve fuel consumption. A technical benefit may include improved performance of the fuel cell vehicle in terms of fuel consumption at portions of a route where increased power may be requested from the fuel cell system, e.g., at ascending portions of the route, thereby the overall performance of the fuel cell vehicle is improved. Thus, a reduced fuel consumption is achieved. In addition, a higher operating temperature may allow a higher heat transfer in a radiator of the cooling system, and may thus be possible to reduce a required power of a cooling fan and thereby further improve fuel consumption.

In some examples, the processing circuitry may be configured to, when the fuel cell vehicle is operating in the normal operating mode, further control the fuel cell vehicle to transition from the normal operating mode to the hot operating mode via the first transition mode by: controlling the fuel vehicle to decrease the cooling electrical power thereby increasing a coolant inlet temperature at the coolant inlet of the fuel cell stack, and to adjust the fuel cell system power output and the cooling electrical power until the coolant inlet temperature is equal to the hot coolant temperature and until the net electric power output value is equal to the required value of the traction power; and further control the fuel cell vehicle to transition from the normal operating mode to the hot operating mode via the second transition mode by controlling the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature, and, when the coolant inlet temperature is equal to the hot coolant temperature, controlling the fuel vehicle to adjust the fuel cell system power output and the cooling electrical power until the net electric power output value is equal to the required value of the traction power.

In some examples, the processing circuitry may be further configured to control transition of the fuel cell vehicle from the normal operating mode to the hot operating mode via the first transition mode, by, when the net electric power output value is greater than the required value of the traction power: control the fuel cell vehicle to adjust the fuel cell system power output and the cooling electrical power by decreasing the fuel cell system power output and decreasing the cooling electrical power until the net electric power output value is equal to the required value of the traction power; and, when the net electric power output value is equal to the required value of the traction power, control the fuel cell vehicle to maintain the net electric power output value constant.

In some examples, the processing circuitry may be further configured to control transition of the fuel cell vehicle from the normal operating mode to the hot operating mode via the first transition mode, by, when the net electric power output value is smaller than the required value of the traction power: controlling the fuel cell vehicle to adjust the fuel cell system power output and the cooling electrical power by increasing the fuel cell system power output and increasing the cooling electrical power until the net electric power output value is equal to the required value of the traction power; and when the net electric power output value is equal to the required value of the traction power, controlling the fuel cell vehicle to maintain the net electric power output value constant.

Controlling the fuel cell vehicle to adjust the fuel cell system power output and the cooling electrical power includes controlling the fuel cell system and the cooling system of the fuel cell vehicle.

In some examples, the processing circuitry may be further configured to control transition of the fuel cell vehicle from the normal operating mode to the hot operating mode via the first transition mode, by, when the net electric power output value is equal to the required value of the traction power, controlling the fuel cell vehicle to maintain the net electric power output value constant by:
(a) when the coolant inlet temperature is below the hot coolant temperature, decreasing the cooling electrical power and decreasing the fuel cell system power output by an amount proportional to an amount of the decrease in the cooling electrical power;
(b) when the coolant inlet temperature is above the hot coolant temperature, increasing the cooling electrical power and increasing the fuel cell system power output by an amount proportional to an amount of the increase in the cooling electrical power;
when the coolant inlet temperature is equal to the hot coolant temperature:
(c) when the net electric power output value is below the required value of the traction power, increasing the cooling electrical power and increasing the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power; and
(d) when the net electric power output value is above the required value of the traction power, decreasing the cooling electrical power and decreasing the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

In some examples, the processing circuitry is further configured to control transition of the fuel cell vehicle from the normal operating mode to the hot operating mode via the second transition mode, by:
(ai) controlling the fuel cell vehicle to decrease the cooling electrical power while maintaining the fuel cell system power output to thereby increase the coolant inlet temperature;
(bi) when the coolant inlet temperature is below the hot coolant temperature, controlling the fuel cell vehicle to decrease the cooling electrical power;
(ci) when the coolant inlet temperature is above the hot coolant temperature, controlling the fuel cell vehicle to increase the cooling electrical power;
(di) when the coolant inlet temperature is equal to the hot coolant temperature, controlling the fuel cell vehicle to adjust the net electric power output value by:
(ei) when the net electric power output value is below the required value of the traction power, increasing the fuel cell system power output and performing any one or more of steps (bi), (ci), and (di) until the coolant inlet temperature is equal to the hot coolant temperature and the net electric power output value is equal to the required value of the traction power, and
(fi) when the net electric power output value is above the required value of the traction power, decreasing the fuel cell system power output and performing any one or more of steps (bi), (ci), and (di) until the coolant inlet temperature is equal to the hot coolant temperature and the net electric power output value is equal to the required value of the traction power.

According to a second aspect of the disclosure, a fuel cell vehicle is provided that comprises the control system in accordance with the first aspect of the disclosure.

The second aspect of the disclosure may seek to control a fuel cell power during the hot operating mode of the vehicle in which the temperature of the coolant is increasing to improve fuel consumption. A technical benefit may include improved performance of the fuel cell vehicle in terms of fuel consumption at portions of a route where increased power may be requested from the fuel cell system, e.g., at ascending portions of the route, thereby the overall performance of the fuel cell vehicle is improved. Thus, a reduced fuel consumption is achieved.

According to a third aspect of the disclosure, a method for controlling transition of a fuel cell vehicle from a normal operating mode to a hot operating mode comprising a fuel saving operating mode is provided. The fuel cell vehicle comprises a fuel cell system comprising a fuel cell stack configured to generate power by electrochemical reaction, and a cooling system configured to circulate a coolant through the fuel cell system to dissipate heat generated by the fuel cell system. In the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature.

The method comprises determining a required value of a traction power from the fuel cell system for the fuel cell vehicle; determining a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output. The method further comprises, when the fuel cell vehicle is operating in the normal operating mode, controlling the fuel cell vehicle to transition from the normal operating mode to the hot operating mode via a first transition mode or a second transition mode, by: in the first transition mode, controlling the fuel vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and, in the second transition mode, controlling the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature.

The third aspect of the disclosure may seek to control a fuel cell power during the hot operating mode of the vehicle in which the temperature of the coolant is increasing to improve fuel consumption. A technical benefit may include improved performance of the fuel cell vehicle in terms of fuel consumption at portions of a route where increased power may be requested from the fuel cell system, e.g., at ascending portions of the route, thereby the overall performance of the fuel cell vehicle is improved. Thus, a reduced fuel consumption is achieved.

In some examples, the method may comprise controlling the transition of the fuel cell vehicle from the normal operating mode to the hot operating mode via the first transition mode, by, when the net electric power output value is greater than the required value of the traction power: controlling the fuel cell vehicle to adjust the fuel cell system power output and the cooling electrical power by decreasing the fuel cell system power output and decreasing the cooling electrical power until the net electric power output value is equal to the required value of the traction power; and when the net electric power output value is equal to the required value of the traction power, controlling the fuel cell vehicle to maintain the net electric power output value constant.

In some examples, the method may comprise controlling the transition of the fuel cell vehicle from the normal operating mode to the hot operating mode via the first transition mode, by, when the net electric power output value is smaller than the required value of the traction power: controlling the fuel cell vehicle to adjust the fuel cell system power output and the cooling electrical power by increasing the fuel cell system power output and increasing the cooling electrical power until the net electric power output value is equal to the required value of the traction power; and when the net electric power output value is equal to the required value of the traction power, controlling the fuel cell vehicle to maintain the net electric power output value constant.

In some examples, the method may comprise controlling the transition of the fuel cell vehicle from the normal operating mode to the hot operating mode via the first transition mode, by, when the net electric power output value is equal to the required value of the traction power, controlling the fuel cell vehicle to maintain the net electric power output value constant by:
(a) when the coolant inlet temperature is below the hot coolant temperature, decreasing the cooling electrical power and decreasing the fuel cell system power output by an amount proportional to an amount of the decrease in the cooling electrical power;
(b) when the coolant inlet temperature is above the hot coolant temperature, increasing the cooling electrical power and increasing the fuel cell system power output by an amount proportional to an amount of the increase in the cooling electrical power;
when the coolant inlet temperature is equal to the hot coolant temperature:
(c) when the net electric power output value is below the required value of the traction power, increasing the cooling electrical power and increasing the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power;
(d) when the net electric power output value is above the required value of the traction power, decreasing the cooling electrical power and decreasing the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

In some examples, the method may comprise controlling the transition of the fuel cell vehicle from the normal operating mode to the hot operating mode via the second transition mode, by:
(ai) controlling the fuel cell vehicle to decrease the cooling electrical power while maintaining the fuel cell system power output to thereby increase the coolant inlet temperature;
(bi) when the coolant inlet temperature is below the hot coolant temperature, controlling the fuel cell vehicle to decrease the cooling electrical power;
(ci) when the coolant inlet temperature is above the hot coolant temperature, controlling the fuel cell vehicle to increase the cooling electrical power;
(di) when the coolant inlet temperature is equal to the hot coolant temperature, controlling the fuel cell vehicle to adjust the net electric power output value by:
(ei) when the net electric power output value is above the required value of the traction power, decreasing the fuel cell system power output and performing any one or more of steps (bi), (ci), and (di) until the coolant inlet temperature is equal to the hot coolant temperature and the net electric power output value is equal to the required value of the traction power; and
(fi) when the net electric power output value is below the required value of the traction power, increasing the fuel cell system power output and performing any one or more of steps (bi), (ci), and (di) until the coolant inlet temperature is equal to the hot coolant temperature and the net electric power output value is equal to the required value of the traction power.

In some examples, the method may comprise controlling the transition of the fuel cell vehicle from the normal operating mode to the hot operating mode via the second transition mode when the required value of the traction power for the vehicle is lower than a first fuel cell system output level threshold for the fuel cell system in the normal operating mode, the first fuel cell system output level threshold in the normal operating mode being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

According to a fourth aspect of the disclosure, a computer program product is provided that comprises computer-executable instructions, which, when executed by processing circuitry, cause the processing circuitry to perform a method in accordance with any one or more examples of the present disclosure.

Advantages and effects of the computer program are largely analogous to the advantages and effects of the method according to the examples herein. Further, all embodiments of the method are applicable to and combinable with all embodiments of the computer program according to the examples herein, and vice versa.

According to a fifth aspect of the disclosure, a computer-readable storage medium is provided that comprises computer-executable instructions, which, when executed by processing circuitry, cause the processing circuitry to perform a method in accordance with any one or more examples of the present disclosure.

Advantages and effects of the computer-readable storage medium are largely analogous to the advantages and effects of the method according to the examples herein. Further, all embodiments of the method are applicable to and combinable with all embodiments of the computer-readable storage medium according to the examples herein, and vice versa.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** illustrates a side view of an example of a fuel cell vehicle in which a method in accordance with an example of aspects of the present disclosure may be implemented.
**FIG. 2** is a block diagram illustrating an example of components of the fuel cell vehicle of FIG. 1, according to an example.
**FIG. 3** is a diagram illustrating a fuel cell system efficiency and fuel cell system heat rejection to a coolant of a cooling system as a function of a fuel cell system power output, according to an example.
**FIG. 4** is a diagram illustrating a net electric power output of the fuel cell system as a function of a fuel cell system power output, according to an example.
**FIG. 5** is a diagram illustrating an example of causing the fuel cell vehicle to transition from the normal operating mode to the hot operating mode, wherein the net electric power output is shown as a function of the cooling electrical power, according to an example.
**FIGs. 6A****,** **6B****,** and **6C** are flowcharts illustrating a method for controlling transition of a fuel cell vehicle from a normal operating mode to a hot operating mode comprising a fuel saving operating mode of a fuel cell vehicle, according to an example.
**FIG. 7** is a schematic diagram of a computer system for implementing examples disclosed herein, according to an example.

### DETAILED DESCRIPTION

A fuel cell system in a fuel cell vehicle such as a fuel cell electric vehicle (FCEV) may generate large amounts of heat which makes it challenging to maintain a temperature of the fuel cell system, particularly at high ambient temperatures. Performance of the fuel cell vehicle during period of increased demands on the fuel cell system may be improved by temporarily increasing a coolant temperature of a coolant circulating in a cooling system of the fuel cell vehicle. Increasing the coolant temperature, which is performed by increasing a target coolant inlet temperature at a coolant inlet of a fuel cell stack of the fuel cell system, may help managing heat generated by the fuel cell system, because when the coolant temperature is increasing, more heat can be added to the coolant than is removed by the cooling system. Another benefit is that as the coolant temperature increases, an efficiency of the cooling system may increase, which makes it possible to increase an amount of power that is available for a vehicle's propulsion/traction system.

However, the coolant temperature in the cooling system can only be increased to a certain extent. Controlling the fuel cell vehicle as it transitions to assume or operate in what is referred to herein as a hot operating mode may be a challenging task. Furthermore, although it is desirable to save hydrogen fuel, it may not be possible in the hot operating mode using existing methods for controlling the fuel cell vehicle.

Accordingly, techniques in accordance with examples of the present disclosure provide a method for controlling the fuel cell vehicle, such as the fuel cell system and the cooling system of the fuel cell vehicle, during transition from a normal operating mode to the hot operating mode when the coolant temperature increases, to decrease fuel consumption by the fuel cell vehicle while maintaining a target traction power also referred to as a target net electric power output. This hot operating mode is referred to herein as a fuel saving operating mode, which is a type of the hot operating mode. The target net electric power output may be defined as an electric power that is requested from the fuel cell system by the fuel cell vehicle, e.g. to drive the fuel cell vehicle and/or to power one or more power take-off devices associated with the fuel cell vehicle.

Controlling the fuel cell vehicle in accordance with examples of the present disclosure may lead to a reduction in the speed of the fuel cell vehicle during the hot operating mode but this is an acceptable compromise because the aim is to reduce fuel consumption by the fuel cell vehicle. In the fuel saving operating mode, the speed of the fuel cell vehicle that may be achieved with the method in accordance with examples of the present disclosure may be the same or similar as the speed that would be achieved in the normal operating mode.

In some examples, in the hot operating mode of the fuel cell vehicle, a target coolant inlet temperature of the coolant passing through the cooling system may be set to a hot coolant temperature. In the normal operating mode of the fuel cell vehicle, the target coolant inlet temperature of the coolant passing through the cooling system may be set to a normal coolant temperature, wherein the hot coolant temperature is higher than the normal coolant temperature. Thus, controlling the fuel cell vehicle to transition to the hot operating mode involves controlling the fuel cell vehicle so that the coolant inlet temperature is increased above the normal coolant temperature, to reach the target coolant inlet temperature such that the hot coolant temperature. The control in accordance with examples of the present disclosure may involve controlling a fuel cell system power and/or controlling a cooling electrical power that is electrical power required to be supplied by the fuel cell system to the cooling system for rejecting output heat that is generated at least by the fuel cell system. Thus, controlling the fuel cell vehicle may include controlling the fuel cell system and/or the cooling system of the fuel cell vehicle.

In some examples, during a transition or shift from the normal operating mode to the hot operating mode, the cooling electrical power may be decreased as the target coolant inlet temperature is increased, which results in reduction of the fuel consumption by the fuel cell system.

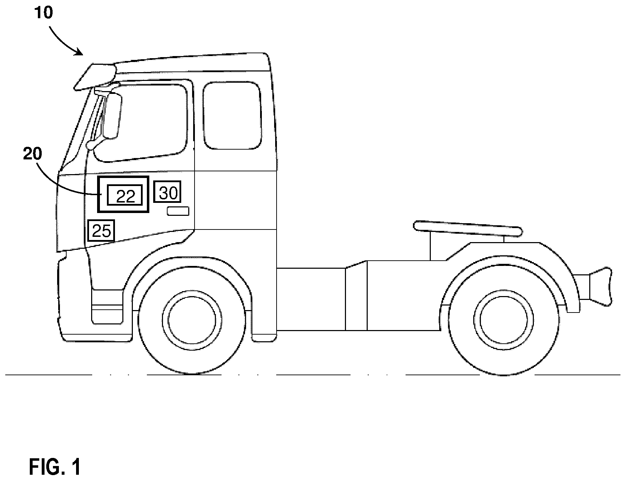

**FIG. 1** depicts a side view of a fuel cell vehicle 10 according to an example of the present disclosure. The fuel cell vehicle 10 is shown as a truck, such as a heavy-duty truck for towing one or more trailers (not shown). The fuel cell vehicle 10 may be a fuel cell electric vehicle (FCEV) or a hybrid vehicle comprising at least one fuel cell system. It should be appreciated that the present disclosure is not limited to any specific type of vehicle, and may be used for any other type of vehicle, such as a bus, construction equipment, e.g. a wheel loader or an excavator, a passenger car, an aircraft, and a marine vessel. The present disclosure is also applicable for other applications not relating to vehicles, including stationary applications.

As shown schematically in FIG. 1, the fuel cell vehicle 10 comprises a fuel cell system 20, which may comprise one or more fuel cell systems. The fuel cell system 20 may be used for powering one or more electric drive motors which are used for creating a propulsion force to the fuel cell vehicle 10. The fuel cell system 20 may additionally be used for powering other electric power consumers (not shown) of the vehicle 10, such as an electric motor for a crane, an electric motor for a refrigerator system, an electric motor for an air conditioning system, an electric motor for an electric heater, or any other electric power consuming function of the fuel cell vehicle 10. The fuel cell system 20 may be used for powering one or more power take-off (PTO) devices that are devices that transfer an electric motor's mechanical power to another piece of equipment.

The fuel cell system 20 comprises two or more fuel cells which together form a fuel cell stack 22 as shown schematically in FIG. 1. In examples herein, the fuel cell system 20 may comprise multiple fuel cell stacks 22, and any mention of the fuel cell stack 22 applies to two or more fuel cell stacks.

As also shown in FIG. 1, the fuel cell vehicle 10 comprises a cooling system 25 configured to pass a coolant through the fuel cell stack 22 of the fuel cell system 20 to dissipate heat generated by the fuel cell system 20 e.g. the fuel cell stack 22.

The fuel cell system 20 may include various components which are not shown herein. The fuel cell system 20 may comprise multiple fuel cell systems, and each fuel cell system may comprise its own control system, which may be communicatively connected to a controller or control unit.

The fuel cell vehicle 10 further comprises a control device or control system 30 configured to control the fuel cell vehicle 10 in accordance with an example. The control system 30 may be e.g. a vehicle controller. The control system 30 may control a fuel cell controller e.g. fuel cell control unit (FCCU) configured to manage and control hydrogen and air processing, thermal and water management, and energy conversion in the fuel cell system 20. The control system 30 may in some examples comprise the fuel cell controller.

The control system 30 may be an on-board control system as shown in FIG. 1. It shall be understood that the control system 30 may also be a remote control system such as an off-board control system, or a combination of an on-board and off-board control system or systems.

The control system 30 may be configured to communicate with components of the fuel cell vehicle 10, e.g., the cooling system, by issuing control instructions or signals and by receiving status information relating to operation of the components. The control system 30 may be configured to receive information from various sensors, including one or more of temperature sensors, voltage sensors, moisture sensors, and other sensors included in or associated with the cooling system 25, the fuel cell system 20, and/or other components of the fuel cell vehicle 10. For example, one or more temperature sensors may be positioned such that they can acquire measurements of a temperature of the coolant in the cooling system 25. For example, a temperature sensor may measure an inlet coolant temperature of the coolant in the cooling system 25, at a coolant inlet of the fuel cell stack 22. Another temperature sensor may measure an outlet coolant temperature of the coolant in the cooling system 25, at a coolant outlet of the fuel cell stack 22.

The control system 30 may acquire data on a current location of the fuel cell vehicle 10, e.g. using a Global Positioning System (GPS) system. The control system 30 may be communicatively coupled to an internal database, an external database, or a combination thereof, to receive data related to a route traveled or to be traveled by the vehicle. The data related to the route may include a start point, an end point, and a path between the start and end points that is being traveled or expected to be traveled by the fuel cell vehicle 10. The control system 30 may store and/or may have access to data related to the route including terrain information e.g. inclination, altitude, speed limits, obstacles, etc. The control system 30 may also receive real-time, or close-to-real-time, information on the route including a traffic congestion, accident reports, road closures, construction, etc. The control system 30 may also store and/or may have access to historical data related to driver's driving pattern, historical data on the vehicle operation e.g. locations traveled by the vehicle, frequency and locations of stops, historical data on ambient conditions at the locations traveled by the vehicle, etc. The control system 30 may further receive data from a weather service which may include data on actual and predicted ambient conditions and other types of data.

The control system 30 may be an electronic control unit and may comprise processing circuitry which is adapted to execute a computer program comprising computer-executable instructions to perform a method according to aspects and examples of the present disclosure. The control system 30 may comprise hardware, firmware, and/or software for performing the methods according to aspects and examples of the present disclosure. The control system 30 may be denoted a computer. The control system 30 may be constituted by one or more separate sub-units, and the control system 30 may communicate by use of wired and/or wireless communication technology.

The fuel cell vehicle 10 comprises various other components not shown in FIG. 1.

Although the present disclosure is described with respect to a fuel cell vehicle such as a truck, aspects of the present disclosure are not restricted to this particular vehicle, but may also be used in other fuel cell vehicles such as passenger cars, off-road vehicles, aircrafts and marine vehicles. The present disclosure may also be applied in vessels and in stationary applications, such as in grid-connected supplemental power generators or in grid-independent power generators.

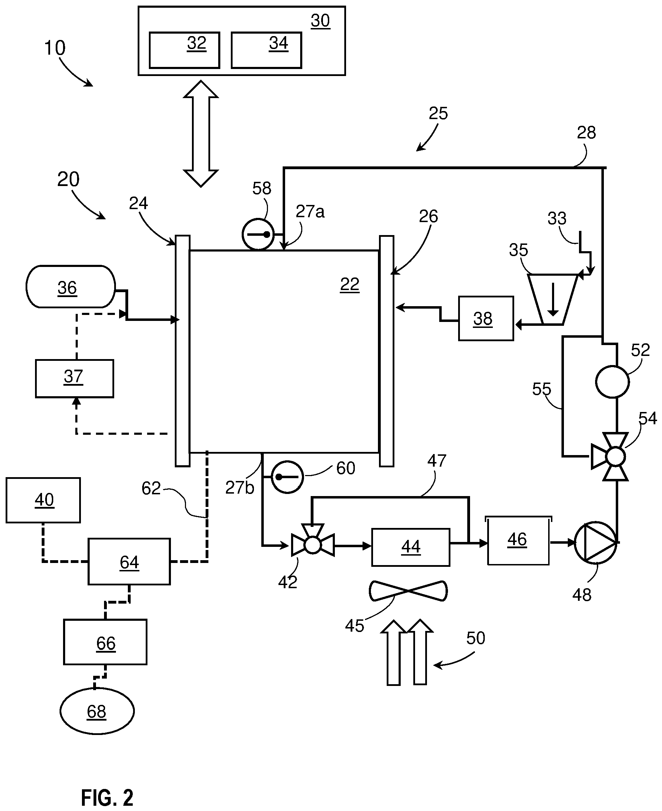

**FIG. 2** further illustrates an example of the fuel cell vehicle 10 comprising the fuel cell system 20, a cooling system 25, and the control system 30, among other components. As shown, the fuel cell system 20 comprises a fuel cell stack 22 comprising an anode side or anode 24, a cathode side or cathode 26, and an electrolyte (not shown) such as e.g. a proton exchange membrane (PEM) sandwiched between the anode 24 and the cathode 26.

The fuel cell stack 22, which may comprise two or more stacks, is configured to receive hydrogen fuel and oxidant such as air or oxygen, and to generate electric energy or power through an electrochemical reaction between the hydrogen and the oxidant.

The fuel cell system 20 comprises a hydrogen supply system configured to supply hydrogen to the anode 24 and an oxygen supply system configured to supply air or oxygen to the cathode 26. The anode 24 receives fuel such as hydrogen, via the hydrogen supply system, that can be supplied from a hydrogen storage device 36 e.g. a hydrogen container or tank. Any suitable source of hydrogen can be used. In some implementations, as shown in FIG. 2, a hydrogen recirculation blower 37 may be provide at an anode outlet of the fuel cell stack 22 such that unreacted hydrogen of the anode, that is remaining after the electrochemical reaction at the fuel cell stack 22, may be supplied back to the anode. In this way, the unused hydrogen is reused. The hydrogen recirculation blower 37 may be part of a hydrogen recirculation system of the fuel cell system 20. The fuel cell system 20 may include other systems, sub-systems, or units.

The cathode 26 is configured to receive, via an oxygen supply system, air from the ambient environment, as shown by a line 33. The ambient air is pressurized by an air compressor 35. The compressed air may be humidified by a humidifier 38. The air compressor 35 may be electrically driven and it may in some examples comprise an electric turbocharger (ETC) comprising a turbine and a compressor.

As shown in FIG. 2, the fuel cell vehicle 10 comprises an electrical storage system (ESS) 40 such as e.g. one or more batteries and/or one or more supercapacitors for storing electric energy, including excess electric energy produced by the fuel cell system 20. The ESS 40 may store energy generated by regenerative braking. The ESS 40 is configured to assist the fuel cell system 20 in supplying energy to an electric drive motor of the fuel cell vehicle 10, to meet power/energy demands of the fuel cell vehicle 10. The fuel cell system 20 and the ESS 40 can provide power to one or more auxiliary systems and devices of the fuel cell vehicle 10.

As shown in FIG. 2, the fuel cell vehicle 10 comprises the cooling system 25 configured to dissipate heat produced as a result of operation of at least the fuel cell system 20, including the electrochemical reaction in the fuel cell stack 22. Thus, the cooling system 25 is configured to pass the coolant through the fuel cell stack 22 to dissipate heat generated by the fuel cell stack 22.

In the example shown in FIG. 2, the cooling system 25 comprises a cooling circuit 28 configured to regulate the temperature of the fuel cell stack 22. The cooling circuit 28 circulates a coolant therein such that the coolant flows into the fuel cell stack 22 via a coolant inlet 27a and flows out of the fuel cell stack 22 via a coolant outlet 27b.

As shown in FIG. 2, the cooling circuit 28 may comprise a radiator 44, a coolant tank 46 for storing the coolant, a coolant pump 48 circulating the coolant, and a heater 52. The radiator 44 is configured and arranged so as to cool down the fuel cell stack 22. The radiator 44 may be in the form of a heat discharger that discharges heat to the outside environment by exchanging heat between the coolant and the outside environment i.e. external air schematically shown by arrows 50. The radiator 44 includes or is associated with a heat exchanger fan 45, also referred to herein as a cooling fan or a blower, that is configured to operate to supply cooling air to the radiator 44 and dissipate heat, to thereby regulate a temperature of the coolant.

The cooling fan 45 and the coolant pump 48 may be referred to as auxiliary cooling devices that are arranged and configured to assist in circulating the coolant in the cooling circuit 28 of the cooling system 25.

In some examples, the cooling circuit 28 may comprise a bypass valve 42 that is configured to be controlled to allow the coolant to flow to a bypass passage 47 through which the coolant flows by bypassing the radiator 44. The cooling circuit 28 may also comprise a bypass valve 54 that is configured to be controlled to allow the coolant to flow to a bypass passage 55 through which the coolant flows by bypassing the heater 52.

As further shown in FIG. 2, the fuel cell system 20 and/or the cooling system 25 comprise a first temperature sensor 58 configured to acquire measurements of a coolant temperature, also referred to as a coolant inlet temperature, at the coolant inlet 27a of the fuel cell stack 22. A second temperature sensor 60 may be used to acquire measurements of a coolant temperature referred to as a coolant outlet temperature, at the coolant outlet 27b of the fuel cell stack 22. The fuel cell system 20 and/or the cooling system 25 may comprise other temperature sensors.

The heater 52 may be used, e.g, in start-up conditions in cold climates or in other situations. In some implementations, the heater may be absent, and, e.g. a power of operation of the cooling fan 45 may be controlled to adjust the coolant temperature at the coolant inlet 27a of the fuel cell stack 22 in accordance with the target coolant inlet temperature set by the control system 30.

In the example of FIG. 2, electric power, shown schematically with a dashed line and labeled as 62, generated by the fuel cell stack 22 may be supplied to a junction box or unit 64, such as e.g. a high-voltage junction box. The power may be supplied to the junction unit 64 through a converter. The power may be supplied, via the junction unit 64, to an electric motor 66, also referred to as an electric traction motor or machine, for propelling one or more sets of wheels 68 of the vehicle 10. The power may also be supplied, via the junction unit 64, to the ESS 40. The junction unit 64 is a component that serves as a communal meeting spot for electrical connections between the fuel cell stack 22, the ESS 40, and the electric motor 66.

It should be appreciated that the components of the fuel cell vehicle 10 are shown in FIG. 2 as an example, since components may be arranged in other ways, and additional or alternative components can be included in the fuel cell system 20, the cooling system 25, and other systems of the fuel cell vehicle 10. For example, more than one heat exchanger fan and/or more than one pump may be employed.

Regardless of the specific implementation of the fuel cell stack 22 and the cooling system 25, a temperature of the coolant circulating through the cooling circuit 28 can be decreased or increased in dependence on the control performed by the control system 30. As shown in FIG. 2, the control system 30 comprises processing circuitry 32 and memory 34 storing computer-executable instructions that, when executed by the processing circuitry 32, perform control of the fuel cell vehicle 10 in accordance with examples of the present disclosure.

In some examples, the processing circuitry 32 may be configured to control operation of the fuel cell vehicle 10 by providing one or more instructions to the fuel cell vehicle 10 and suitable components of the fuel cell vehicle 10 to transition or switch the fuel cell vehicle 10 from operating in the normal operating mode to operating in the hot operating mode. The fuel cell vehicle 10 may assume the hot operating mode as a result of the transition. In accordance with examples of the present disclosure, the hot operating mode comprises a fuel saving operating mode.

The cooling power consumption or the cooling electrical power may set a limit on a maximum traction power available to propel the fuel cell vehicle.

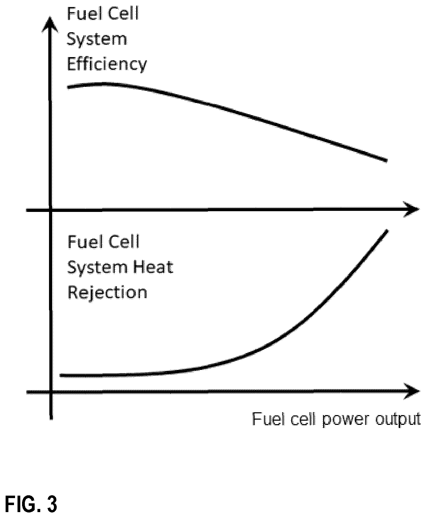

As shown schematically in FIG. 3, a fuel cell system efficiency may decrease with an increase in the fuel cell power output. This occurs because, as the fuel cell power output increases, an amount of output heat that is generated by the fuel cell system when operating so as to produce the fuel cell system power output, increases. Thus, heat rejection by the fuel cell system, to the coolant circulating in the cooling system, increases. Accordingly, to increase the fuel cell system power output, more heat needs to be dispersed by the cooling system, e.g., to the ambient environment, in order to maintain a desired temperature of the fuel cell system. The cooling electrical power may be required, e.g., by at least one auxiliary cooling device of the cooling system comprising, e.g., the cooling fan 45 and the coolant pump 48 shown in FIG. 2, which may be referred to as auxiliary cooling devices. In some examples, the at least one auxiliary cooling device may additionally include an air compressor and/or other devices. Depending on an implementation of the cooling system in a fuel cell vehicle, various devices may be considered to be auxiliary cooling devices that facilitate circulation of the coolant through the cooling system.

Efficiency of the cooling system decreases after a certain point, due to the cooling system having a certain capacity in terms of heat dissipation, which capacity is not unlimited. Thus, in order to be able to reject more heat in the cooling system, the cooling electrical power needs to be increased in order to run the at least one auxiliary cooling device at higher power levels. The increase in the amount of the cooling electrical power required to be supplied by the fuel cell system to the cooling system, in turn, leads to increased costs of the cooling electrical power.

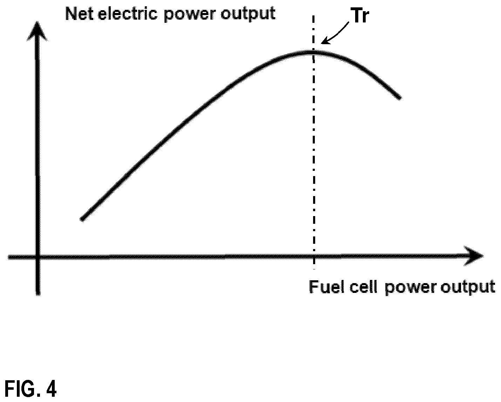

As the fuel cell system power output increases, the heat rejection demand also increases. At a certain point, an amount of the cooling electrical power required to disperse the heat generated by the fuel cell system becomes so high that increasing values of the fuel cell system power output becomes futile or ineffective. This is due to the fact that the additional fuel cell system power is only used as the cooling electrical power, to run the at least one auxiliary cooling device. Instead of supplying power to an electric power consumer e.g. an electric motor of a fuel cell vehicle, the fuel cell system power output is used to operate the at least one auxiliary cooling device. Accordingly, requesting higher values of the fuel cell system power output beyond a certain point may be counterproductive since a net electric power output is decreased even though the fuel cell system power output increases, as shown schematically in FIG. 4. Thus, beyond the certain point, shown in FIG. 4 as a threshold Tr point selected among multiple fuel cell system outputs, a net electric power output, which would be available e.g. to drive the vehicle forward and/or to charge the ESS, will decrease.

Accordingly, for any given ambient conditions, air density, a speed of the fuel cell vehicle, and a coolant temperature, a fuel cell system output level threshold can be determined for the fuel cell system. The fuel cell system output level threshold is such that when the fuel cell system is operated so as to produce a fuel cell system power output corresponding to the fuel cell system output level threshold, the net electric power output value is larger than the net electric power output value obtained when the fuel cell system is operated so as to produce a fuel cell system power output exceeding the fuel cell system output level threshold. Furthermore, the fuel cell system power output may be limited so that it does not exceed the fuel cell system output level threshold, wherein the fuel cell system output level threshold is a value beyond which an increase in the fuel cell system power output will lead to a reduction in the net electric power output available to a consumer, e.g. to drive the fuel cell vehicle, charge the ESS, and/or to power a PTO device associated with the vehicle.

The fuel cell system output level threshold may be determined by determining the cooling electrical power required for consumption by least one auxiliary cooling device at each level of the fuel cell system output power. The level of the fuel cell system output power may depend on a total electric power produced by the fuel cell stack minus power used to operate at least one fuel cell system auxiliary device such as e.g., an air compressor, a humidifier, a hydrogen recirculation blower, and/or any other device.

The fuel cell system output level threshold may vary depending on a coolant temperature, because the efficiency of the cooling system changes with coolant temperature. Accordingly, by increasing the coolant temperature, it may be possible to increase the fuel cell system output level threshold thereby increasing the net electric power output by the fuel cell system.

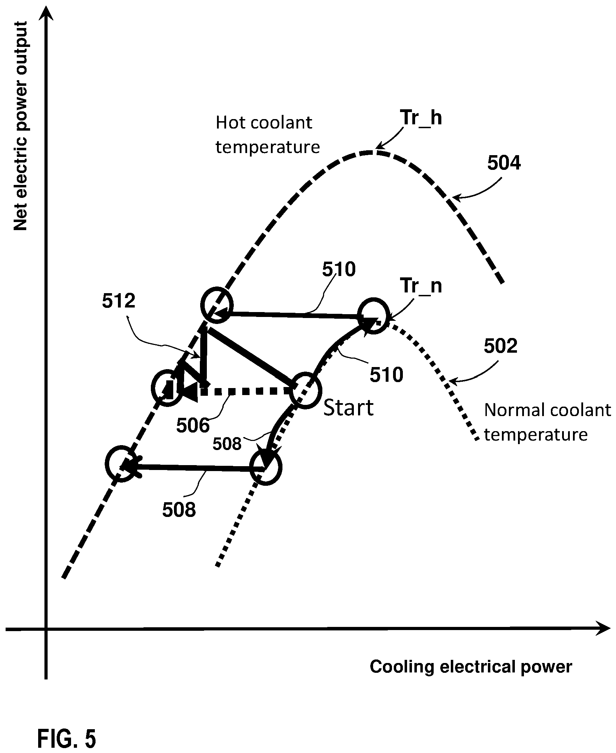

**FIG. 5** is a schematic illustration of an example of techniques in accordance with the present disclosure for causing the fuel cell vehicle to transition from the normal operating mode to the hot operating mode comprising a fuel saving operating mode, wherein the net electric power output is shown as a function of the cooling electrical power. The control system may decide to instruct the fuel cell vehicle to transition to the hot operating mode when the fuel cell vehicle is climbing or is predicted to climb a steep hill, or when the fuel cell vehicle is traveling or approaching any part of the route requiring higher power, e.g. due to a load carried by the vehicle, a certain legal speed at the route, and/or other factors.

A graph 502, shown by a dotted line, illustrates the net electric power output as a function of the cooling electrical power for the normal operating mode such as at a normal coolant temperature. A fuel cell system output level threshold, also referred to herein as a first fuel cell system output level threshold, for the normal operating mode of the fuel cell vehicle is shown as an operating point Tr_n in FIG. 5.

In some examples, the first fuel cell system output level threshold for the fuel cell vehicle operated in the normal operating mode may be determined as described in a copending European Patent Application No. EP24207395.5, which is hereby incorporated by reference herein in its entirety.

The efficiency of the cooling system may be increased by increasing the coolant temperature, and a graph 504, shown by a dashed line, illustrates the net electric power output as a function of the cooling electrical power for the hot operating mode such as at a hot coolant temperature. A fuel cell system output level threshold, also referred to herein as a second fuel cell system output level threshold, for the hot operating mode of the fuel cell vehicle is shown as an operating point Tr_h in FIG. 5. The operating point Tr_h indicated a point of a maximum traction power in the hot operating mode. In examples in accordance with the present disclosure, wherein the hot operating mode comprises the fuel saving operating mode, the operating point Tr_h is not reached, as illustrated in FIG. 5.

From a starting operating point, indicated as "Start" in FIG. 5, which represents a current value of the net electric power output provided by the fuel cell system, the coolant inlet temperature may be increased, so that the fuel cell vehicle assumes the hot operating mode, via the first or second transition modes. For example, the fuel cell vehicle may be climbing a hill or approaching a hill, and it may be determined that it is beneficial for the vehicle to assume the hot operating mode comprising the fuel saving operating mode, such that the vehicle may climb the hill while saving hydrogen fuel. It should be noted that climbing a hill is mentioned as an example only of a scenario in which the fuel cell vehicle may be controlled or instructed to assume the hot operating mode. The fuel cell vehicle may also be traveling a flat part of the route. There may be other various circumstances at which the fuel cell vehicle may be controlled or instructed to assume the hot operating mode comprising the fuel saving operating mode. Because the aim of the fuel saving operating mode is reducing fuel consumption, the fuel cell vehicle may be traveling various parts of the road and not necessarily climbing a hill.

When the net electric power output is equal to the required value of the traction power, such that the required value of the traction power remains constant from the starting point, this may be a scenario illustrated by a path 506 shown using a dotted arrow. Thus, the path 506 shows the transition to the hot operating mode when the required value of the traction power is the same as a starting point indicating a current net electric power output value when the transition from the hot operating mode to the normal operating mode is initiated.

A path 508, shown by two solid arrows in FIG. 5, illustrates an example of a scenario when the net electric power output is lower or smaller than the required value of the traction power such that a lower traction power is required than the starting point indicating the net electric power output value when the transition from the hot operating mode to the normal operating mode is initiated.

A path 510, shown by two solid arrows in FIG. 5, illustrates an example of a scenario when the net electric power output is greater than or above the required value of the traction power. As shown in FIG. 5, the net electric power output in this case may reach the first fuel cell system output level threshold Tr_n for the normal operating mode of the fuel cell vehicle. Thus, from the starting point, the fuel cell system power output and the cooling electrical power may be simultaneously increased until the net electric power output reaches a value of the first fuel cell system output level threshold Tr_n. The cooling electrical power and the fuel cell system power output may then be decreased, while maintaining or keeping the net electric power output value constant, until the coolant inlet temperature reaches the hot coolant temperature whereby the fuel cell system and the fuel cell vehicle assume the hot operating mode. In the scenario illustrated by the path 510, a speed in which the fuel cell vehicle may e.g. climb a hill on the route traveled by the vehicle, may remain at a level of the speed that can be achieved by the vehicle in the normal operating mode.

The net electric power output value achieved when the fuel cell vehicle transitions to and assumes the hot operating mode via the second transition mode may be lower than the second fuel cell system output level threshold Tr_h shown in FIG. 5. For example, as one non-limiting example, the net electric power output value may be 30 kW - 40 kW lower than the second fuel cell system output level threshold Tr_h that could be achieved in the hot operating mode. This allows operating the fuel cell vehicle, e.g. as it climbs a hill, while using less fuel than otherwise would have been consumed by the vehicle in the hot operating mode. Because the aim is to use less hydrogen fuel, the fuel cell vehicle may be controlled so that the net electric power output value does not exceed the second fuel cell system output level threshold Tr_h. Thus, although the speed of the fuel cell vehicle may not be as high as could have been achieved in the hot operating mode, fuel consumption by the vehicle may be reduced.

In some examples, the second fuel cell system output level threshold for the fuel cell vehicle operated in the hot operating mode may be determined as described in a copending European Patent Application No. EP24207395.5, which is hereby incorporated by reference herein in its entirety.

A zig-zagged path 512 from the start operating point illustrates an example of how the net electric power output value may vary as a function of the cooling electrical power when the control system controls or instructs the fuel cell vehicle to transition from the normal operating mode to the hot operating mode via the second transition mode. In this scenario, the required value of the traction power that is required from the fuel cell system may be lower than the first fuel cell system output level threshold Tr_n for the fuel cell system in the normal operating mode. When the fuel cell vehicle is controlled to transition to or switch to the hot operating mode via the second transition mode, there is a certain risk of damage to the membrane of the fuel cell stack, due to a mechanical stress on the membrane. Nevertheless, this approach may be appropriate in some circumstances.

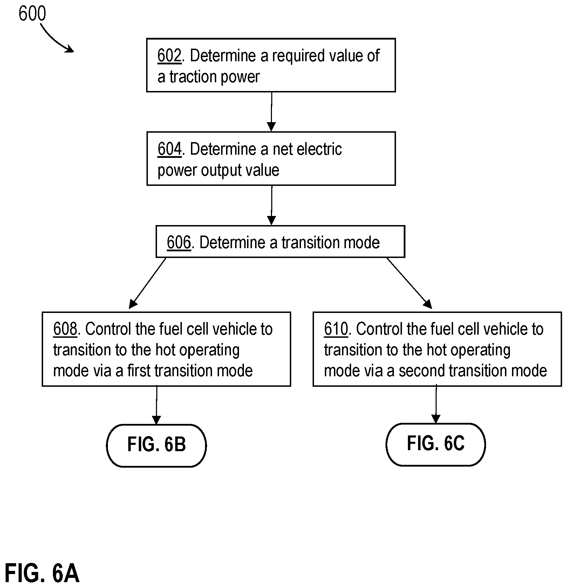

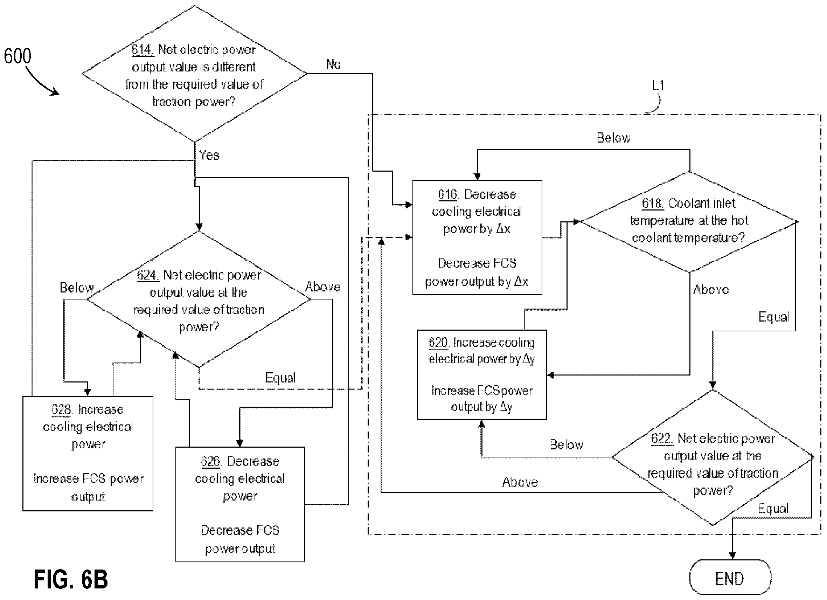

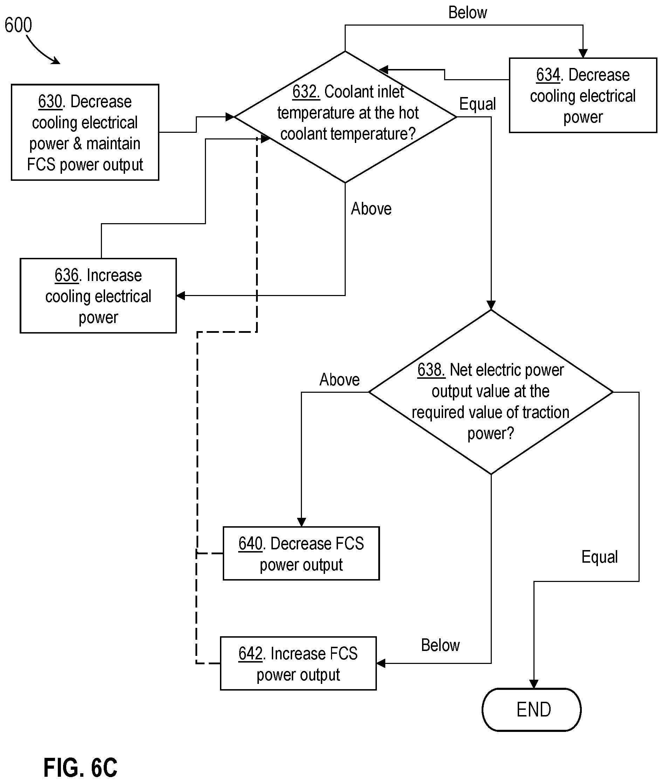

**FIGs. 6A****,** **6B****,** and **6C** are flowcharts illustrating a process or method 600 of controlling operation of a fuel cell vehicle in accordance with examples of the present disclosure. As used herein, controlling the fuel cell vehicle to transition from operating in the normal operating mode to operating in or assuming the hot operating mode may involve instructing the fuel cell vehicle, e.g., by the control system, to perform certain actions. Controlling or instructing the fuel cell vehicle may comprise controlling or instructing one or more components, devices, or systems of the fuel cell vehicle, such as the fuel cell system, the cooling system, and others.

The method 600 involves controlling transition of the fuel cell vehicle from the normal operating mode to the hot operating mode comprising the fuel saving operating mode. The fuel cell vehicle comprises a fuel cell system comprising a fuel cell stack configured to generate power by electrochemical reaction, and a cooling system configured to circulate a coolant through the fuel cell system to dissipate heat generated by the fuel cell system. The cooling system is configured such that the coolant enters the fuel cell stack at a coolant inlet. In the normal operating mode, a coolant inlet temperature of the coolant at the coolant inlet of the fuel cell stack comprises a normal coolant temperature. In the hot operating mode, the coolant inlet temperature of the coolant inlet temperature at the coolant inlet of the fuel cell stack comprises a hot coolant temperature, wherein the hot coolant temperature is higher than the normal coolant temperature. Thus, to switch or transition to the hot operating mode, the target coolant inlet temperature is increased which results in the increase in the actual coolant inlet temperature at the coolant inlet of the fuel cell stack. Once the actual coolant inlet temperature reaches the target coolant inlet temperature i.e. the hot coolant temperature, the fuel cell vehicle may be said to have transitioned to or assumed the hot operating mode.

The fuel saving operating mode is a type of the hot operating mode in which the fuel cell vehicle is controlled to operate at an increased coolant temperature, such as at hot coolant temperature, whereas a fuel consumption by the fuel cell vehicle is decreased.

In some examples, the normal coolant temperature may comprise 60 °C and the hot coolant temperature may comprise 80 °C. In some examples, the normal coolant temperature may comprise 60 °C and the hot coolant temperature may comprise 75 °C. In some examples, the normal coolant temperature may comprise 60 °C and the hot coolant temperature may comprise 70 °C. In some examples, the hot coolant temperature may be selected from a range of temperatures from 70 °C to 90 °C, inclusive of 70 °C and 90 °C. The normal coolant temperature may be selected from a range of temperatures from 60 °C to 70 °C, inclusive of 60 °C and 70 °C, and in any case lower than the hot coolant temperature. It should be appreciated that the above are non-limiting examples.

The method may be performed by the control system 30 e.g. by the processing circuitry 32 of the control system 30.

At **block 602,** the control system determines a required value of a traction power from the fuel cell system for the fuel cell vehicle. The required value of the traction power from the fuel cell system may also be referred to as a request from the fuel cell system for a certain amount of power, to drive the fuel cell vehicle and optionally one or more auxiliary devices e.g. one or more PTO devices.

The fuel cell vehicle may be traveling a route. The route may be assigned to be fuel cell vehicle e.g. as part of a mission or an assignment. The control system may be aware of features of the route for the vehicle, such as a start or departure point, an end or destination point, and a path to be traveled by the vehicle from the start to the end point. In some cases, the fuel cell vehicle may be part of a fleet of vehicles.

The required value of the traction power may be a required value of a current or predicted traction power. The required value of the traction power may depend on one or more of a current and/or predicted speed of the fuel cell vehicle, the route, ambient conditions, one or more characteristics of the fuel cell vehicle, and other features.

In some examples, the required value of the current or predicted traction power from the fuel cell system may not include a required traction from the ESS of the fuel cell vehicle. In other words, the required value of the traction power, which can also be referred to as a fuel cell system traction power request or a requested net electric power output, may indicate an amount of power that the fuel cell vehicle is requesting from the fuel cell system, after an amount of the traction power that the fuel cell vehicle can receive from the ESS has been determined by the control system. It should be noted that the required value of the traction power from the fuel cell system may be determined while taking a power capacity of the ESS into account. For instance, during a long, steep climb the power capacity of the ESS can be derated or decreased in order to not deplete ESS before reaching a top of the climb. Thus, in order to fulfill fuel cell vehicle power requirements, the required value of the traction power from the fuel cell system may be increased.

At **block 604,** the control system determines a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output. The cooling electrical power may also be referred to as a cooling auxiliary power.

The net electric power output value may be determined by determining a difference between the fuel cell system power output and the cooling electrical power value.

The net electric power output value may refer to an actual value of the traction power that the fuel cell system may provide.

The fuel cell system power output refers to an electric power output that may be available for use by the cooling system and one or more electric power consumers, after power requirements of the fuel cell system itself are met. The power requirements of the fuel cell system include power requirements of at least one fuel cell system auxiliary device such as e.g., of one or more of the fuel cell stack, the air compressor, the humidifier, the hydrogen recirculation blower, and other components included in or associated with the fuel cell system. In examples herein, the fuel cell system power output may be determined in dependance on which one or more components, included in or associated with the fuel cell system, are considered to use a portion of the electric power produced by the fuel cell system such that the rest of the electric power produced by the fuel cell system may be available for other power consumption needs, e.g., by the cooling system and one or more electric power consumers that are separate from the fuel cell system. Thus, various components or devices may be considered to be fuel cell system auxiliary devices, and their power requirements may be accounted for as part of the fuel cell system power output.

Accordingly, the fuel cell system may be controlled to produce or generate certain fuel cell system power output, wherein the fuel cell system power output includes electric power required by one or more components included in or associated with the fuel cell system, such one or more components comprising one or more of the fuel cell stack, the air compressor, the humidifier, the hydrogen recirculation blower, and other components.

There may be different heat rejection demands for a particular fuel cell system power output. The cooling electrical power may comprise an amount of output heat that needs to be rejected by the cooling system for the corresponding fuel cell system power level or output. The output heat is also referred to as waste heat because it is produced by the fuel cell system as a byproduct of its operation, as well as by one or more additional heat sources.

As the fuel cell power output increases, the heat rejection demand increases i.e. the fuel cell system needs to generate more power to drive components of the cooling system. For example, as a fuel cell vehicle traveling a route is driving uphill and the fuel cell system generates more electric power than e.g. on flatter parts of the route, higher amounts of waste heat are generated by the fuel cell system, and an amount of heat to be dissipated by the cooling system increases. Thus, different cooling electrical power values may be determined for corresponding fuel cell system power outputs, depending on determining or predicting how much waste heat, produced by the fuel cell system, the cooling system would need to reject at the particular fuel cell system power output.

In some examples, the cooling system of the fuel cell vehicle may comprise at least one auxiliary cooling device configured to assist in circulating the coolant, the cooling electrical power required to be supplied by the fuel cell system to the cooling system for rejecting output heat that is generated at least by the fuel cell system when operating so as to produce the fuel cell system power output comprising cooling electrical power required to be supplied by the fuel cell system to the at least one auxiliary cooling device. The at least one auxiliary cooling device of the cooling system may comprise one or more of the cooling fan, the coolant pump, the air compressor, and/or other devices.

In some examples, a cooling electrical power value may be determined using at least the ambient condition data of the environment where the fuel cell system is operating or is expected to be operating and the cooling electrical power required to be supplied by the fuel cell system to the at least one auxiliary cooling device. The cooling electrical power value may additionally be determined using one or more of a state of health (SoH) of the fuel cell system, an efficiency of the cooling system, an SoH of the cooling system, an efficiency of the cooling system, one or more fuel cell vehicle conditions, a temperature of the coolant circulating in the cooling system, and heat rejection requirements of one or more additional heat sources.

The one or more additional heat sources may comprise an ESS e.g. one or more batteries, an air conditioning system, and/or other components that generate heat during operation of the fuel cell vehicle.

The temperature of the coolant may be determined, e.g., at the coolant inlet and/or a coolant outlet of the fuel cell stack. One or more fuel cell vehicle conditions may comprise a current or predicted speed of the fuel cell vehicle, a weight of a load carried by the fuel cell vehicle, and other conditions. It should be noted that the SoH of the fuel cell system, the SoH of the cooling system, and the temperature of the coolant circulating in the cooling system may be considered to be one or more fuel cell vehicle conditions.

In some examples, the SoH of the fuel cell system may be determined by determining an SoH of the fuel cell stack included in the fuel cell system. The fuel cell system may include more than one fuel cell stacks, and SoHs of all of the fuel cell stacks may be determined and combined in a certain manner to determine the SoH of the entire fuel cell system.

In some examples, the SoH of the fuel cell stack may be defined as or based on one or more of a voltage level of the fuel cell stack at a certain current, a difference between the voltage level of the fuel cell stack at the certain current and a reference voltage at the certain current, a number of operating hours of the fuel cell stack, and a number of start/stop events for the fuel cell stack i.e. that the fuel cell stack has experienced. In some examples, the SoH of the fuel cell stack may be defined based on one or more of the difference between the voltage level of the fuel cell stack at the certain current and the reference voltage at the certain current, the number of operating hours of the fuel cell stack, and the number of start/stop events for the fuel cell stack. In some examples, the SoH of the fuel cell stack may be defined based on the difference between the voltage level of the fuel cell stack at the certain current and the reference voltage at the certain current and the number of operating hours of the fuel cell stack.

The voltage level can be defined as a measured level of voltage at the output of the fuel cell stack. In some examples, to assess an SoH of the fuel cell stack, at every power level of that fuel cell stack, it is possible to check the voltage and current output from the fuel cell stack against a known or reference voltage and current values corresponding to that power level.

For the fuel cell stack, an output voltage for a given current output, which can also be referred to as a current density, may be known. As the fuel cell stack ages, the known relationship between the output voltage and the current output changes such that a difference may be observed between the voltage level of the fuel cell stack at the certain current and a reference voltage at the same certain current. For example, when the measured voltage level of the fuel cell stack at the certain current is below the reference voltage at the same certain current, the control system may determine that the SoH of the fuel cell stack has decreased.

The number of operating hours of the fuel cell stack can be defined as a number of hours that the fuel cell stack has been operated i.e. has been active or activated. In some cases, the number of operating hours of the fuel cell stack may not include periods of inactivity of the fuel cell stack. The number of start/stop events for the fuel cell stack can be defined as a number of times that fuel cell stack has been activated or started and deactivated or stopped. Other parameters may be used to determine the SoH of the fuel cell stack. One or more of the parameters may be used, alone or in combination, to determine the SoH of the fuel cell stack. The SoH of fuel cell stack may be determined using various approaches. The SoH of a fuel cell stack may be expressed in percentage units, or in other suitable units. For example, the fuel cell stack with 100% SoH may be in the beginning of its lifetime and its condition may be defined by certain values of one or more parameters used to indicate an SoH of the stack, while a lower percentage of an SoH of a fuel cell stack may indicate a certain level of degradation of the fuel cell stack as indicated by different values of the one or more parameters.

The SoH of the fuel cell stack may be monitored and updated, as the fuel cell stack ages, throughout a lifetime of the fuel cell stack. In some examples, a mission management system of the fuel cell vehicle may store information on the SoH of each fuel cell stack of the fuel cell system. The control system may receive or obtain this information from the mission management system. In some cases, the mission management system may be part of the control system.

The efficiency of the cooling system may be determined based on determining an ability of the cooling system to dissipate heat. For example, an amount of power that the cooling system e.g. at least one auxiliary cooling device requires to dissipate a certain amount of heat, as compared to a reference amount of power, may be measured to determine how efficiently the cooling system absorbs heat. An additional or alternative way may include measuring a flow rate of the coolant flowing in the coolant system, and determining a change in the flow rate with time. A difference between a current efficiency of the cooling system and an efficiency of the cooling system when it was new may be indicative of degradation in the efficiency of the cooling system.

At **block 606,** the control system may determine whether to control the fuel cell vehicle to transition from the normal operating mode to the hot operating mode via a first transition mode or via a second transition mode. For example, FIG. 5 illustrates an example of the fuel cell vehicle transitioning to the hot operating mode comprising the fuel saving operating mode via the first transition mode or via the second transition mode. The first transition mode may involve controlling the fuel cell vehicle so that the coolant inlet temperature increases slower, such that it may take longer to reach the hot coolant temperature than it would take via the second transition mode.

In either of the first and second transitions modes, the control system controls the fuel cell vehicle so that the coolant inlet temperature is increasing, until the coolant inlet temperature reaches i.e. becomes equal to the hot coolant temperature and the net electric power output value becomes equal to the required value of the traction power.

At **block 608,** the control system may control the fuel cell vehicle to transition from the normal operating mode to the hot operating mode, comprising the fuel saving operating mode, via the first transition mode, as shown in more detail in FIG. 6B. In the first transition mode, the control system controls the fuel vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature. At block 608, the method 600 may follow to FIG. 6B.

At **block 610,** the control system may control the fuel cell vehicle to transition from the normal operating mode to the hot operating mode, comprising the fuel saving operating mode, via the second transition mode, as shown in more detail in FIG. 6C. In the second transition mode, the control system controls the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature. At block 610, the method 600 may follow to FIG. 6C.

In examples herein, the fuel cell vehicle may be said to have transitioned to the hot operating mode when the coolant inlet temperature of the coolant at the inlet of the fuel cell stack reaches the hot coolant temperature. The control system also controls operation of the fuel cell vehicle so that the net electric power output value is equal to the required value of traction power that is required or, in other words, requested from the fuel cell system.

**FIG. 6B** continues illustration of the method 600 and shows in in more detail controlling the fuel cell vehicle to transition from the normal operating mode to the hot operating mode, comprising the fuel saving operating mode, via the first transition mode. The first transition mode may involve controlling the fuel cell vehicle to assume the hot operating mode (1) when the net electric power output value is above or greater than the required value of the traction power, (2) when the net electric power output value is below or smaller than the required value of the traction power, or (3) when the net electric power output value is equal to the required value of the traction power. The first transition mode is considered to be a slower transition mode than the second transition mode to the hot operating mode.

The processing shown in FIG. 6B may be performed as part of the processing at block 608 in FIG. 6A.

At **block 614** of FIG. 6B, the control system may determine whether the net electric power output value is different from the required value of the traction power.

At **block 616,** in response to determining at block 614 that the net electric power output value is not different ("No") from the required value of the traction power, i.e. that the net electric power is equal to the required value of the traction power, when the coolant inlet temperature is below the hot coolant temperature, the control system may control the fuel cell vehicle to decrease the cooling electrical power and decrease the fuel cell system power output by an amount proportional to an amount of the decrease in the cooling electrical power. In examples herein, decreasing the cooling electrical power may comprise one or more of decreasing a speed of a cooling fan and decreasing a speed of a coolant pump, though other components of the cooling system may be controlled as well. Decreasing the fuel cell system power output may comprise decreasing flows of reactants, such as hydrogen and air, to the fuel cell stack of the fuel cell system.

The cooling electrical power and the fuel cell system (FCS) power output may be decreased by same Δx amount, e.g. Δx kilowatt (kW), thereby the net electric power output value is maintained constant. It should be noted that the Δx kW is shown to indicate that both the cooling electrical power and fuel cell system power output may simultaneously be reduced or decreased by the same amount, which amount may differ at different iterations of the process 600 at block 616. The reduction in the fuel cell system power output will lead to reduction in heat rejection to the coolant, whereas the reduction in the cooling electrical power will lead to a lower performance of the cooling system. As a result, the coolant inlet temperature may start to increase at a slower speed than in the second transition mode.

When the control system determines that the net electric power is equal to the required value of the traction power, with reference to FIG. 5, this may be a scenario shown by the path 506 when a required value of the traction power is the same as a starting point indicating a current net electric power output value when the transition from the normal operating mode to the hot operating mode is initiated.

At **block 618,** the control system may determine whether the coolant inlet temperature is at the hot coolant temperature. The determining whether the coolant inlet temperature is at the hot coolant temperature may comprise determining that the coolant inlet temperature is below the hot coolant temperature, or that the coolant inlet temperature is above the hot coolant temperature, or that the coolant inlet temperature is equal to the hot coolant temperature.

In response to determining at block 618 that the coolant inlet temperature is below the hot coolant temperature, the method 600 may return to block 616 as shown in FIG. 6B. Thus, the control system may control the fuel cell vehicle to decrease the cooling electrical power and decrease the fuel cell system power output by the amount proportional to the amount of the decrease in the cooling electrical power until the coolant inlet temperature reaches the hot coolant temperature.

At **block 620,** in response to determining at block 618 that the coolant inlet temperature is above the hot coolant temperature, the control system may control the fuel cell vehicle, such as the cooling system, to increase the cooling electrical power and increase the fuel cell system power output by an amount proportional to an amount of the increase in the cooling electrical power. The cooling electrical power and the fuel cell system (FCS) power output may be increased by same Δy amount, e.g. Δy kW, thereby the net electric power output value is maintained constant. It should be noted that the Δy kW is shown to indicate that both the cooling electrical power and fuel cell system power output may simultaneously be increased by the same amount, which amount may differ at different iterations of the process 600 at block 620.

In examples herein, increasing the cooling electrical power may comprise one or more of increasing a speed of a cooling fan and increasing a speed of a coolant pump, though other components of the cooling system may be controlled as well. Increasing the fuel cell system power output may comprise increasing flows of reactants, such as hydrogen and air, to the fuel cell stack of the fuel cell system.

As shown in FIG. 6B, the method 600 may follow to block 618 to where the control system may determine whether the coolant inlet temperature is at the hot coolant temperature. Thus, the control system may control the fuel cell vehicle to increase the cooling electrical power and increase the fuel cell system power output by the amount proportional to the amount of the increase in the cooling electrical power until the coolant inlet temperature reaches the hot coolant temperature.

At **block 622,** in response to determining at block 618 that the coolant inlet temperature is equal to the hot coolant temperature, the control system may determine whether the net electric power output value is at the required value of traction power. The determining whether the net electric power output value is at the required value of traction power may comprise determining that the net electric power output value is below the required value of traction power, or that the net electric power output value is above the required value of traction power, or that the net electric power output value is equal to the required value of traction power. The process 600 may end when it is determined that the net electric power output value is equal to the required value of traction power, as shown in FIG. 6B. At this point, both the coolant inlet temperature is equal to the hot coolant temperature, and the net electric power output value is equal to the required value of the traction power.

As used herein, the term "equal" allows for a certain deviation from a given value, such as a deviation of ±1% or ±2% or ±3%, wherein a maximum deviation may be ±3%.

As a loop L1, shown with a dot-dashed line in FIG. 6B, converges, both the cooling electrical and the fuel cell power output have decreased whereas the net electric power output value has been maintained constant such as equal to the net electric power output value. In this way, a reduction in fuel consumption by the fuel cell vehicle is advantageously achieved.

As shown in FIG. 6B, when the coolant inlet temperature is equal to the hot coolant temperature and when the net electric power output value is below the required value of the traction power, as determined by the control system at block 622, the method 600 may follow to block 620 wherein the control system may control the fuel cell vehicle to increase the cooling electrical power and increase the fuel cell system power output by the amount proportional to the amount of the increase in the cooling electrical power. From block 620, the method 600 may continue the processing at one or more of blocks 618, 620, 616, and 622, such as in the loop L1, until the coolant inlet temperature is equal to the hot coolant temperature and the net electric power output value is equal to the required value of the traction power.

As also shown in FIG. 6B, when the coolant inlet temperature is equal to the hot coolant temperature and when the net electric power output value is above the required value of the traction power, as determined by the control system at block 622, the method 600 may follow to block 616 wherein the control system may control the fuel cell vehicle to decrease the cooling electrical power and decrease the fuel cell system power output by the amount proportional to an amount of the decrease in the cooling electrical power. From block 616, the method 600 may continue the processing at one or more of blocks 616, 620, 618, and 622, such as in the loop L1, until the coolant inlet temperature is equal to the hot coolant temperature and the net electric power output value is equal to the required value of the traction power.

Referring back to block 614, in response to determining at block 614 that the net electric power output value is different ("Yes") from the required value of the traction power, i.e. that the net electric power is above or below the required value of the traction power, the method 600 may proceed to block 624.

At **block 624,** the control system may determine whether the net electric power output value is at the required value of the traction power. It should be appreciated that the processing at decision blocks 614 and 624 is shown in separate blocks for illustration purposes only, as the processing may be performed at the same block.

At **block 626,** when the coolant inlet temperature is below the hot coolant temperature, the control system may control the transition of the fuel cell vehicle from the normal operating mode to the hot operating mode via the first transition mode, by, when the net electric power output value is above or greater than the required value of the traction power, controlling the fuel cell vehicle to adjust the fuel cell system power output and the cooling electrical power by decreasing the fuel cell system power output and decreasing the cooling electrical power until the net electric power output value reaches i.e. becomes equal to the required value of the traction power. With reference to FIG. 5, this may be a scenario shown by the path 508 when a lower traction power is required than a starting point indicating the net electric power output value when the transition from the normal operating mode to the hot operating mode is initiated. The cooling electrical power may be decreased as per a normal or standard relationship to the fuel cell system power output, such that the cooling electrical power is not decreased by the same amount as the fuel cell system power output. When the cooling electrical power is decreased as per the normal or standard relationship to the fuel cell system power output, a coolant inlet temperature may not change. In general, according to the standard relationship between cooling electrical power and a fuel cell system power output, the coolant inlet temperature may be maintained constant, regardless of the fuel cell system power output.

As shown in FIG. 6B, the process 600 may return to block 624 and may then follow again to block 626, which may be repeated, until the control system determines at block 624 that the net electric power output value is equal to the required value of the traction power.

At **block 628,** when the coolant inlet temperature is below the hot coolant temperature, the control system may control the transition of the fuel cell vehicle from the normal operating mode to the hot operating mode via the first transition mode, by, when the net electric power output value is below or smaller than the required value of the traction power, controlling the fuel cell vehicle to adjust the fuel cell system power output and the cooling electrical power by increasing the fuel cell system power output and increasing the cooling electrical power until the net electric power output value reaches i.e. becomes equal to the required value of the traction power. With reference to FIG. 5, this may be a scenario shown by the path 510 when a higher traction power is required than a starting point indicating the net electric power output value when the transition from the normal operating mode to the hot operating mode is initiated. The cooling electrical power may be increased as per the normal or standard relationship to the fuel cell system power output. As shown in FIG. 6B, the process 600 may return to block 624 and may then follow again to block 628, which may be repeated, until the control system determines at block 624 that the net electric power output value is equal to the required value of the traction power.

When the net electric power output value is equal to the required value of the traction power, as determined at block 624, the control system may control the fuel cell vehicle to maintain the net electric power output value constant. As shown via a dashed line, for illustration purposes only, when the control system determines at block 624 that the net electric power output value is equal to the required value of the traction power, the process 600 may follow from block 624 to block 616 thereby the process 600 may proceed performing the steps of the loop L1, to maintain the net electric power output value constant. As discussed above, the processing in accordance with the steps of the loop L1 may be performed until the coolant inlet temperature is equal to the hot coolant temperature and the net electric power output value is equal to the required value of the traction power.

Referring back to block 610 of FIG. 6A, the process 600 may proceed as shown in FIG. 6C which illustrates in more detail an example of the control system controlling a transition of the fuel cell vehicle from the normal operating mode to the hot operating mode comprising the fuel saving operating mode, via the second transition mode. The processing at blocks of FIG. 6C may be performed as part of the processing at block 610 of FIG. 6A.

In some examples, controlling the transition of the fuel cell vehicle from the normal operating mode to the hot operating mode via the second transition mode may be performed when the required value of the traction power for the vehicle is lower than a first fuel cell system output level threshold for the fuel cell system in the normal operating mode. The first fuel cell system output level threshold in the normal operating mode may be such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold. Thus, as shown in FIG. 5 by the path 512 illustrating the fuel cell vehicle transition to the hot operating mode via the second transition mode, the required value of the traction power for the vehicle may be lower than a first fuel cell system output level threshold, shown as Tr_n, for the fuel cell system in the normal operating mode. A second fuel cell system output level threshold may be a fuel cell system output level threshold Tr_h for the fuel cell system in the hot operating mode.

When the fuel cell vehicle is controlled or instructed to use of the second transition mode to transition from the normal operating mode to the hot operating mode, the coolant inlet temperature reaches the hot coolant temperature fast as compared to when the first operating mode is used.

At **block 630,** the control system may control the fuel cell vehicle to decrease the cooling electrical power while maintaining the fuel cell system power output to thereby increase the coolant inlet temperature. This results in the increase of the traction power such as the net electric power output value.

At **block 632,** the control system may determine whether the coolant inlet temperature is at the hot coolant temperature, which may comprise determining whether the coolant inlet temperature is below the hot coolant temperature, the coolant inlet temperature is above the hot coolant temperature, or the coolant inlet temperature is equal to the hot coolant temperature.

When the coolant inlet temperature is below the hot coolant temperature, as determined at block 632, the process 600 may follow to **block 634** wherein the control system may control the fuel cell vehicle to decrease the cooling electrical power. As the cooling electrical power is reduced, the traction power or the net electric power output value increases. The process 600 may then return to block 632 and, if needed, may again proceed to block 634, whereby one or more iterations of decreasing the cooling electrical power may be performed in some cases. The iterations may be performed until it is determined that the coolant inlet temperature is equal to the hot coolant temperature, indicating that the fuel cell vehicle has assumed the hot operating mode.

At **block 636,** when the coolant inlet temperature is above the hot coolant temperature, the control system may control the fuel cell vehicle to increase the cooling electrical power. The cooling electrical power may be increased as per the normal or standard relationship to the fuel cell system power output.

In response to determining at block 632 that the coolant inlet temperature is equal to the hot coolant temperature, the control system may control or instruct the fuel cell vehicle to adjust the net electric power output value. This may be performed as follows.

At **block 638,** the control system may determine whether the net electric power output value is at the required value of the traction power, which may comprise determining whether the net electric power output value is above, below, or equal to the required value of the traction power.

At **block 640,** in response to determining that the net electric power output value is above the required value of the traction power, the control system may control or instruct the fuel cell vehicle to decrease the fuel cell system power output. The process 600 may then follow to block 632 as shown by a dashed line in FIG. 6C, where it is verified whether the coolant inlet temperature is at or equal to the hot coolant temperature. The processing as shown in FIG. 6C may thus be performed until the control system determines, at blocks 632 and 638 respectively, that the coolant inlet temperature is equal to the hot coolant temperature and the net electric power output value is equal to the required value of the traction power.

At **block 642,** in response to determining that the net electric power output value is below the required value of the traction power, the control system may control or instruct the fuel cell vehicle to increase the fuel cell system power output. The process 600 may then follow to block 632 as shown by a dashed line in FIG. 6C, where it is verified whether the coolant inlet temperature is at or equal to the hot coolant temperature. The processing as shown in FIG. 6C may be performed until the control system determines, at blocks 632 and 638 respectively, that the coolant inlet temperature is equal to the hot coolant temperature and the net electric power output value is equal to the required value of the traction power.

Accordingly, as shown in connection with FIG. 6C, after the coolant inlet temperature has reached the coolant temperature, the fuel cell system traction power also referred to the net electric power output value may be verified. As the cooling electrical power reduces, the net electric power output value increases, and in that case the fuel cell system power output will be reduced to a level of the required value of the traction power. The reduction in the fuel cell system power output may lead to a reduction in heat rejection to the coolant, and the coolant inlet temperature may therefore be verified and, if required, the cooling electrical power may be adjusted. If, after the control loop for the coolant inlet temperature, the net electric power output value reduces below the required value of the traction power, the fuel cell system power output may be increased. That will lead to an increase in heat rejection to the coolant, which may again require a verification and, if needed, adjustment of the coolant inlet temperature.

After both the coolant inlet temperature becomes equal to the hot coolant temperature and the net electric power output value reaches i.e. becomes equal to the required value of the traction power, the processing may stop or end as shown in FIG. 6C. As a result, both the cooling electrical power and the fuel cell system power output have been reduced, while maintaining the net electric power output value, which advantageously leads to a reduction in fuel consumption by the fuel cell vehicle.

To perform the method steps described herein, the control 30 may be configured to perform the processing described in connection with FIGs. 6A, 6B, 6C and/or any other examples in accordance with the present disclosure.

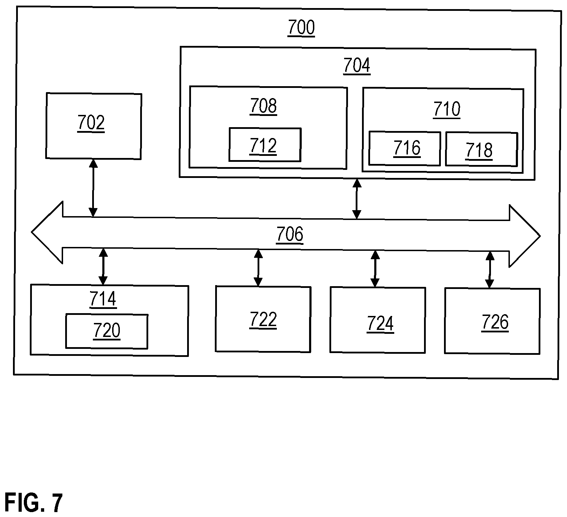

**FIG. 7** is a schematic diagram of a computer system **700** for implementing examples disclosed herein. The control system 30 may be implemented as the computer system 700. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may respectively be combined with any of the other examples herein.

### EXAMPLES

Example 1. A control system for a fuel cell vehicle comprising a fuel cell system comprising a fuel cell stack configured to generate power by electrochemical reaction, and a cooling system configured to circulate a coolant through the fuel cell system to dissipate heat generated by the fuel cell system ,
the control system comprising processing circuitry that is configured to control transition of the fuel cell vehicle from a normal operating mode to a hot operating mode comprising a fuel saving operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the processing circuitry is configured to:
determine a required value of a traction power from the fuel cell system for the fuel cell vehicle;
determine a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output;
when the fuel cell vehicle is operating in the normal operating mode, control the fuel cell vehicle to transition from the normal operating mode to the hot operating mode via a first transition mode or a second transition mode by:
   in the first transition mode, controlling the fuel cell vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and
   in the second transition mode, controlling the fuel cell vehicle to decrease the cooling electrical power while maintaining the fuel cell system power output constant thereby increasing the coolant inlet temperature at the coolant inlet of the fuel cell stack, until the coolant inlet temperature is equal to the hot coolant temperature.

Example 2. The control system of Example 1, wherein the processing circuitry is configured to, when the fuel cell vehicle is operating in the normal operating mode,
further control the fuel cell vehicle to transition from the normal operating mode to the hot operating mode via the first transition mode by:
   controlling the fuel vehicle to decrease the cooling electrical power thereby increasing a coolant inlet temperature at the coolant inlet of the fuel cell stack, and to adjust the fuel cell system power output and the cooling electrical power until the coolant inlet temperature is equal to the hot coolant temperature and until the net electric power output value is equal to the required value of the traction power; and
further control the fuel cell vehicle to transition from the normal operating mode to the hot operating mode via the second transition mode by:
   controlling the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature, and
   when the coolant inlet temperature is equal to the hot coolant temperature, controlling the fuel vehicle to adjust the fuel cell system power output and the cooling electrical power until the net electric power output value is equal to the required value of the traction power.

Example 3. The control system of Example 1 or Example 2, wherein the processing circuitry is further configured to control transition of the fuel cell vehicle from the normal operating mode to the hot operating mode via the first transition mode, by, when the net electric power output value is greater than the required value of the traction power:
controlling the fuel cell vehicle to adjust the fuel cell system power output and the cooling electrical power by decreasing the fuel cell system power output and decreasing the cooling electrical power until the net electric power output value is equal to the required value of the traction power; and
when the net electric power output value is equal to the required value of the traction power, controlling the fuel cell vehicle to maintain the net electric power output value constant.

Example 4. The control system of any one of Examples 1 to 3, wherein the processing circuitry is further configured to control transition of the fuel cell vehicle from the normal operating mode to the hot operating mode via the first transition mode, by, when the net electric power output value is smaller than the required value of the traction power:
control the fuel cell vehicle to adjust the fuel cell system power output and the cooling electrical power by increasing the fuel cell system power output and increasing the cooling electrical power until the net electric power output value is equal to the required value of the traction power; and
when the net electric power output value is equal to the required value of the traction power, control the fuel cell vehicle to maintain the net electric power output value constant.

Example 5. The control system of any one of Examples 1 to 4, wherein the processing circuitry is further configured to control transition of the fuel cell vehicle from the normal operating mode to the hot operating mode via the first transition mode, by, when the net electric power output value is equal to the required value of the traction power, controlling the fuel cell vehicle to maintain the net electric power output value constant by:
(a) when the coolant inlet temperature is below the hot coolant temperature, decreasing the cooling electrical power and decreasing the fuel cell system power output by an amount proportional to an amount of the decrease in the cooling electrical power;
(b) when the coolant inlet temperature is above the hot coolant temperature, increasing the cooling electrical power and increasing the fuel cell system power output by an amount proportional to an amount of the increase in the cooling electrical power;
when the coolant inlet temperature is equal to the hot coolant temperature:
(c) when the net electric power output value is below the required value of the traction power, increasing the cooling electrical power and increasing the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power;
(d) when the net electric power output value is above the required value of the traction power, decreasing the cooling electrical power and decreasing the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

Example 6. The control system of any one of Examples 1 to 5, wherein the processing circuitry is further configured to control transition of the fuel cell vehicle from the normal operating mode to the hot operating mode via the second transition mode, by:
(ai) controlling the fuel cell vehicle to decrease the cooling electrical power while maintaining the fuel cell system power output to thereby increase the coolant inlet temperature;
(bi) when the coolant inlet temperature is below the hot coolant temperature, controlling the fuel cell vehicle to decrease the cooling electrical power;
(ci) when the coolant inlet temperature is above the hot coolant temperature, controlling the fuel cell vehicle to increase the cooling electrical power;
(di) when the coolant inlet temperature is equal to the hot coolant temperature, controlling the fuel cell vehicle to adjust the net electric power output value by:
   (ei) when the net electric power output value is below the required value of the traction power, increasing the fuel cell system power output and performing any one or more of steps (bi), (ci), and (di) until the coolant inlet temperature is equal to the hot coolant temperature and the net electric power output value is equal to the required value of the traction power, and
   (fi) when the net electric power output value is above the required value of the traction power, decreasing the fuel cell system power output and performing any one or more of steps (bi), (ci), and (di) until the coolant inlet temperature is equal to the hot coolant temperature and the net electric power output value is equal to the required value of the traction power.

Example 7. A fuel cell vehicle comprising a control system of any one of Examples 1 to 6.

Example 8. A method for controlling transition of a fuel cell vehicle from a normal operating mode to a hot operating mode comprising a fuel saving operating mode, the fuel cell vehicle comprising a fuel cell system comprising a fuel cell stack configured to generate power by electrochemical reaction, and a cooling system configured to circulate a coolant through the fuel cell system to dissipate heat generated by the fuel cell system,
wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the method comprising:
determining a required value of a traction power from the fuel cell system for the fuel cell vehicle;
determining a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output;
when the fuel cell vehicle is operating in the normal operating mode, controlling the fuel cell vehicle to transition from the normal operating mode to the hot operating mode via a first transition mode or a second transition mode, by:
   in the first transition mode, controlling the fuel vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and
   in the second transition mode, controlling the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature.

Example 9. The method of Example 8, comprising controlling the transition of the fuel cell vehicle from the normal operating mode to the hot operating mode via the first transition mode, by, when the net electric power output value is greater than the required value of the traction power:
controlling the fuel cell vehicle to adjust the fuel cell system power output and the cooling electrical power by decreasing the fuel cell system power output and decreasing the cooling electrical power until the net electric power output value is equal to the required value of the traction power; and
when the net electric power output value is equal to the required value of the traction power, controlling the fuel cell vehicle to maintain the net electric power output value constant.

Example 10. The method of Example 8 or Example 9, comprising controlling the transition of the fuel cell vehicle from the normal operating mode to the hot operating mode via the first transition mode, by, when the net electric power output value is smaller than the required value of the traction power:
controlling the fuel cell vehicle to adjust the fuel cell system power output and the cooling electrical power by increasing the fuel cell system power output and increasing the cooling electrical power until the net electric power output value is equal to the required value of the traction power; and
when the net electric power output value is equal to the required value of the traction power, controlling the fuel cell vehicle to maintain the net electric power output value constant.

Example 11. The method of any one of Examples 8 to 10, comprising controlling the transition of the fuel cell vehicle from the normal operating mode to the hot operating mode via the first transition mode, by, when the net electric power output value is equal to the required value of the traction power,
controlling the fuel cell vehicle to maintain the net electric power output value constant by:
(a) when the coolant inlet temperature is below the hot coolant temperature, decreasing the cooling electrical power and decreasing the fuel cell system power output by an amount proportional to an amount of the decrease in the cooling electrical power;
(b) when the coolant inlet temperature is above the hot coolant temperature, increasing the cooling electrical power and increasing the fuel cell system power output by an amount proportional to an amount of the increase in the cooling electrical power;
when the coolant inlet temperature is equal to the hot coolant temperature:
(c) when the net electric power output value is below the required value of the traction power, increasing the cooling electrical power and increasing the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power;
(d) when the net electric power output value is above the required value of the traction power, decreasing the cooling electrical power and decreasing the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

Example 12. The method of any one of Examples 8 to 11, comprising controlling the transition of the fuel cell vehicle from the normal operating mode to the hot operating mode via the second transition mode, by:
(ai) controlling the fuel cell vehicle to decrease the cooling electrical power while maintaining the fuel cell system power output to thereby increase the coolant inlet temperature;
(bi) when the coolant inlet temperature is below the hot coolant temperature, controlling the fuel cell vehicle to decrease the cooling electrical power;
(ci) when the coolant inlet temperature is above the hot coolant temperature, controlling the fuel cell vehicle to increase the cooling electrical power;
(di) when the coolant inlet temperature is equal to the hot coolant temperature, controlling the fuel cell vehicle to adjust the net electric power output value by:
   (ei) when the net electric power output value is above the required value of the traction power, decreasing the fuel cell system power output and performing any one or more of steps (bi), (ci), and (di) until the coolant inlet temperature is equal to the hot coolant temperature and the net electric power output value is equal to the required value of the traction power.
   (fi) when the net electric power output value is below the required value of the traction power, increasing the fuel cell system power output and performing any one or more of steps (bi), (ci), and (di) until the coolant inlet temperature is equal to the hot coolant temperature and the net electric power output value is equal to the required value of the traction power.

Example 13. The method of any one of Examples 8 to 12, wherein the method comprises controlling the transition of the fuel cell vehicle from the normal operating mode to the hot operating mode via the second transition mode when the required value of the traction power for the vehicle is lower than a first fuel cell system output level threshold for the fuel cell system in the normal operating mode, the first fuel cell system output level threshold in the normal operating mode being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

Example 14. A computer program product comprising computer-executable instructions which, when executed by processing circuitry, cause the processing circuitry to perform the method according to any one of Examples 8 to 13.

Example 15. A non-transitory computer-readable storage medium comprising computer-executable instructions which, when executed by processing circuitry, cause the processing circuitry to perform the method according to any one of Examples 8 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A control system (30) for a fuel cell vehicle (10) comprising a fuel cell system (20) comprising a fuel cell stack (22) configured to generate power by electrochemical reaction, and a cooling system (25) configured to circulate a coolant through the fuel cell system (20) to dissipate heat generated by the fuel cell system (20),
the control system (30) comprising processing circuitry (32) that is configured to control transition of the fuel cell vehicle from a normal operating mode to a hot operating mode comprising a fuel saving operating mode, wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the processing circuitry is configured to:
determine a required value of a traction power from the fuel cell system for the fuel cell vehicle;
determine a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output;
when the fuel cell vehicle is operating in the normal operating mode, control the fuel cell vehicle to transition from the normal operating mode to the hot operating mode via a first transition mode or a second transition mode by:
in the first transition mode, controlling the fuel cell vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and
in the second transition mode, controlling the fuel cell vehicle to decrease the cooling electrical power while maintaining the fuel cell system power output constant thereby increasing the coolant inlet temperature at the coolant inlet of the fuel cell stack, until the coolant inlet temperature is equal to the hot coolant temperature.

2. The control system of claim 1, wherein the processing circuitry is configured to, when the fuel cell vehicle is operating in the normal operating mode,
further control the fuel cell vehicle to transition from the normal operating mode to the hot operating mode via the first transition mode by:
controlling the fuel vehicle to decrease the cooling electrical power thereby increasing a coolant inlet temperature at the coolant inlet of the fuel cell stack, and to adjust the fuel cell system power output and the cooling electrical power until the coolant inlet temperature is equal to the hot coolant temperature and until the net electric power output value is equal to the required value of the traction power; and
further control the fuel cell vehicle to transition from the normal operating mode to the hot operating mode via the second transition mode by:
controlling the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature, and
when the coolant inlet temperature is equal to the hot coolant temperature, controlling the fuel vehicle to adjust the fuel cell system power output and the cooling electrical power until the net electric power output value is equal to the required value of the traction power.

3. The control system of claim 1 or claim 2, wherein the processing circuitry is further configured to control transition of the fuel cell vehicle from the normal operating mode to the hot operating mode via the first transition mode, by, when the net electric power output value is greater than the required value of the traction power:
controlling the fuel cell vehicle to adjust the fuel cell system power output and the cooling electrical power by decreasing the fuel cell system power output and decreasing the cooling electrical power until the net electric power output value is equal to the required value of the traction power; and
when the net electric power output value is equal to the required value of the traction power, controlling the fuel cell vehicle to maintain the net electric power output value constant.

4. The control system of any one of claims 1 to 3, wherein the processing circuitry is further configured to control transition of the fuel cell vehicle from the normal operating mode to the hot operating mode via the first transition mode, by, when the net electric power output value is smaller than the required value of the traction power:
control the fuel cell vehicle to adjust the fuel cell system power output and the cooling electrical power by increasing the fuel cell system power output and increasing the cooling electrical power until the net electric power output value is equal to the required value of the traction power; and
when the net electric power output value is equal to the required value of the traction power, control the fuel cell vehicle to maintain the net electric power output value constant.

5. The control system of any one of claims 1 to 4, wherein the processing circuitry is further configured to control transition of the fuel cell vehicle from the normal operating mode to the hot operating mode via the first transition mode, by, when the net electric power output value is equal to the required value of the traction power,
controlling the fuel cell vehicle to maintain the net electric power output value constant by:
(a) when the coolant inlet temperature is below the hot coolant temperature, decreasing the cooling electrical power and decreasing the fuel cell system power output by an amount proportional to an amount of the decrease in the cooling electrical power;
(b) when the coolant inlet temperature is above the hot coolant temperature, increasing the cooling electrical power and increasing the fuel cell system power output by an amount proportional to an amount of the increase in the cooling electrical power;
when the coolant inlet temperature is equal to the hot coolant temperature:
(c) when the net electric power output value is below the required value of the traction power, increasing the cooling electrical power and increasing the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power;
(d) when the net electric power output value is above the required value of the traction power, decreasing the cooling electrical power and decreasing the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

6. The control system of any one of claims 1 to 5, wherein the processing circuitry is further configured to control transition of the fuel cell vehicle from the normal operating mode to the hot operating mode via the second transition mode, by:
(ai) controlling the fuel cell vehicle to decrease the cooling electrical power while maintaining the fuel cell system power output to thereby increase the coolant inlet temperature;
(bi) when the coolant inlet temperature is below the hot coolant temperature, controlling the fuel cell vehicle to decrease the cooling electrical power;
(ci) when the coolant inlet temperature is above the hot coolant temperature, controlling the fuel cell vehicle to increase the cooling electrical power;
(di) when the coolant inlet temperature is equal to the hot coolant temperature, controlling the fuel cell vehicle to adjust the net electric power output value by:
(ei) when the net electric power output value is below the required value of the traction power, increasing the fuel cell system power output and performing any one or more of steps (bi), (ci), and (di) until the coolant inlet temperature is equal to the hot coolant temperature and the net electric power output value is equal to the required value of the traction power, and
(fi) when the net electric power output value is above the required value of the traction power, decreasing the fuel cell system power output and performing any one or more of steps (bi), (ci), and (di) until the coolant inlet temperature is equal to the hot coolant temperature and the net electric power output value is equal to the required value of the traction power.

7. A fuel cell vehicle (10) comprising a control system (30) of any one of claims 1 to 6.

8. A method (600) for controlling transition of a fuel cell vehicle from a normal operating mode to a hot operating mode comprising a fuel saving operating mode, the fuel cell vehicle comprising a fuel cell system comprising a fuel cell stack configured to generate power by electrochemical reaction, and a cooling system configured to circulate a coolant through the fuel cell system to dissipate heat generated by the fuel cell system,
wherein in the normal operating mode a coolant inlet temperature of the coolant at a coolant inlet of the fuel cell stack comprises a normal coolant temperature, and in the hot operating mode the coolant inlet temperature at the coolant inlet of the fuel cell stack comprises a hot coolant temperature, and wherein the hot coolant temperature is higher than the normal coolant temperature, the method comprising:
determining (602) a required value of a traction power from the fuel cell system for the fuel cell vehicle;
determining (604) a net electric power output value of the fuel cell system, wherein the net electric power output value is determined based on a fuel cell system power output and a cooling electrical power value indicative of a cooling electrical power required to be supplied by the fuel cell system to the cooling system for rejecting output heat that is generated at least by the fuel cell system when operating so as to produce the fuel cell system power output;
when the fuel cell vehicle is operating in the normal operating mode, controlling the fuel cell vehicle to transition from the normal operating mode to the hot operating mode via a first transition mode or a second transition mode, by:
in the first transition mode, controlling (608) the fuel vehicle to decrease the cooling electrical power thereby increasing a coolant inlet temperature at the coolant inlet of the fuel cell stack, and to adjust the fuel cell system power output and the cooling electrical power, until the coolant inlet temperature is equal to the hot coolant temperature; and
in the second transition mode, controlling (610) the fuel vehicle to decrease the cooling electrical power while maintaining the fuel cell system power output constant thereby increasing a coolant inlet temperature at the coolant inlet of the fuel cell stack, until the coolant inlet temperature is equal to the hot coolant temperature.

9. The method of claim 8, comprising controlling the transition of the fuel cell vehicle from the normal operating mode to the hot operating mode via the first transition mode, by, when the net electric power output value is greater than the required value of the traction power:
controlling the fuel cell vehicle to adjust the fuel cell system power output and the cooling electrical power by decreasing (626) the fuel cell system power output and decreasing (626) the cooling electrical power until the net electric power output value is equal to the required value of the traction power; and
when the net electric power output value is equal to the required value of the traction power, controlling the fuel cell vehicle to maintain the net electric power output value constant.

10. The method of claim 8 or claim 9, comprising controlling the transition of the fuel cell vehicle from the normal operating mode to the hot operating mode via the first transition mode, by, when the net electric power output value is smaller than the required value of the traction power:
controlling the fuel cell vehicle to adjust the fuel cell system power output and the cooling electrical power by increasing (628) the fuel cell system power output and increasing (628) the cooling electrical power until the net electric power output value is equal to the required value of the traction power; and
when the net electric power output value is equal to the required value of the traction power, controlling the fuel cell vehicle to maintain the net electric power output value constant.

11. The method of any one of claims 8 to 10, comprising controlling the transition of the fuel cell vehicle from the normal operating mode to the hot operating mode via the first transition mode, by, when the net electric power output value is equal to the required value of the traction power,
controlling the fuel cell vehicle to maintain the net electric power output value constant by:
(a) when the coolant inlet temperature is below the hot coolant temperature, decreasing (616) the cooling electrical power and decreasing (616) the fuel cell system power output by an amount proportional to an amount of the decrease in the cooling electrical power;
(b) when the coolant inlet temperature is above the hot coolant temperature, increasing (620) the cooling electrical power and increasing (620) the fuel cell system power output by an amount proportional to an amount of the increase in the cooling electrical power;
when the coolant inlet temperature is equal to the hot coolant temperature:
(c) when the net electric power output value is below the required value of the traction power, increasing (620) the cooling electrical power and increasing (620) the fuel cell system power output by an amount proportional to an amount of the increase in the cooling electrical power, and performing steps (a) and/or (b) until the coolant inlet temperature is equal to the hot coolant temperature and the net electric power output value is equal to the required value of the traction power;
(d) when the net electric power output value is above the required value of the traction power, decreasing (616) the cooling electrical power and decreasing (616) the fuel cell system power output by an amount proportional to an amount of the decrease in the cooling electrical power, and performing steps (a) and/or (b) until the coolant inlet temperature is equal to the hot coolant temperature and the and the net electric power output value is equal to the required value of the traction power.

12. The method of any one of claims 8 to 11, comprising controlling the transition of the fuel cell vehicle from the normal operating mode to the hot operating mode via the second transition mode, by:
(ai) controlling the fuel cell vehicle to decrease (630) the cooling electrical power while maintaining the fuel cell system power output to thereby increase the coolant inlet temperature;
(bi) when the coolant inlet temperature is below the hot coolant temperature, controlling the fuel cell vehicle to decrease (634) the cooling electrical power;
(ci) when the coolant inlet temperature is above the hot coolant temperature, controlling the fuel cell vehicle to increase (636) the cooling electrical power;
(di) when the coolant inlet temperature is equal to the hot coolant temperature, controlling the fuel cell vehicle to adjust the net electric power output value by:
(ei) when the net electric power output value is above the required value of the traction power, decreasing (640) the fuel cell system power output and performing any one or more of steps (bi), (ci), and (di) until the coolant inlet temperature is equal to the hot coolant temperature and the net electric power output value is equal to the required value of the traction power.
(fi) when the net electric power output value is below the required value of the traction power, increasing (642) the fuel cell system power output and performing any one or more of steps (bi), (ci), and (di) until the coolant inlet temperature is equal to the hot coolant temperature and the net electric power output value is equal to the required value of the traction power.

13. The method of any one of claims 8 to 12, wherein the method comprises controlling the transition of the fuel cell vehicle from the normal operating mode to the hot operating mode via the second transition mode when the required value of the traction power for the vehicle is lower than a first fuel cell system output level threshold for the fuel cell system in the normal operating mode, the first fuel cell system output level threshold in the normal operating mode being such that when the fuel cell system is operated in the normal operating mode so as to produce a fuel cell system power output corresponding to the first fuel cell system output level threshold, the net electric power output value is larger than the net electric power output value obtained when the fuel cell system is operated in the normal operating mode so as to produce a fuel cell system power output exceeding the first fuel cell system output level threshold.

14. A computer program product comprising computer-executable instructions which, when executed by processing circuitry, cause the processing circuitry to perform the method according to any one of claims 8 to 13.

15. A non-transitory computer-readable storage medium comprising computer-executable instructions which, when executed by processing circuitry, cause the processing circuitry to perform the method according to any one of claims 8 to 13.
